# EUROPÄISCHE PATENTANMELDUNG

(11) **EP 1 635 099 A1**
(43) Veröffentlichungstag der Anmeldung: **15.03.2006**
(21) Anmeldenummer: 04021333.2
(22) Anmeldetag: 08.09.2004
(51) Int. Cl.: F16L 5/00, H02G 3/22

(54) **Verfahren und Einrichtung zur Überwachung der Dichtigkeit wenigstens einer Schottung und entsprechende Schottung**

(71) Anmelder: Bröder, Jan, 25421 Pinneberg (DE)
(72) Erfinder: Bröder, Jan, 25421 Pinneberg (DE)
(74) Vertreter: Seemann, Ralph

(57) **Zusammenfassung**

Die Erfindung betrifft ein Verfahren und eine Einrichtung zur Überwachung der Dichtigkeit wenigstens einer Schottung (10,30-34), die zur dichten Durchführung von Kabel (14) und/oder Rohrleitungen (14') durch Bauteile (11) geeignet ist.

Das erfindungsgemäße Verfahren zeichnet sich dadurch aus, dass zunächst ein Hohlraum (13) in der wenigstens einen Schottung (10,30 bis 34) mit einem von der Umgebung sich unterscheidenden Druck (P) beaufschlagt wird, wobei anschließend der Druck (P) über eine vorgebbare Zeit (t) oder nach einer vorgebbaren Zeit (t) gemessen wird und bei Überschreiten oder Unterschreiten eines vorgebbaren Solldruckwertes (21,Pₛₒₗₗ) ein Signal (50) generiert wird, das eine unzureichende Dichtigkeit repräsentiert.

Die entsprechende erfindungsgemäße Einrichtung enthält eine Druckleitung (15) zur Zuführung des Drucks (P) wenigstens einen Drucksensor (16,16'), wenigstens eine Druckvergleichsvorrichtung (45) und eine Überwachungsvorrichtung (48), die mit dem Ausgang der Vergleichsvorrichtung (45) wenigstens mittelbar verbunden ist.

## Beschreibung

Auf industriell genutzten Anlagen beispielsweise in Kliniken, Kraftwerken und weiteren Anlagen werden Rohre und Kabel durch Wände jeglicher Art und Nutzen geführt. Diese werden wiederum durch Dichtungen verschiedenster Art und Form abgedichtet. So werden beispielsweise in explosiven Bereichen Kabel und Rohre durch modulare Abschottungssysteme abgedichtet. Diese sollen kurzfristig Gasdrücke von mehreren bar standhalten und sollen außerdem eine entsprechende Brandschutzklassifizierung aufweisen. Ein entsprechendes Abschottsystem bzw. eine entsprechende Schottung ist beispielsweise aus der DE 101 50 075 A1, die der EP 1 311 044 A2 entspricht, bekannt. In diesen Dokumenten ist eine modulare Schottung offenbart, die in einer Alternative zum Doppelschott einen gemeinsamen Prüfraum realisiert, mit dem eine Undichtigkeit mit Hilfe eines Lecksuchsprays lokalisiert werden kann.

Diese Methode ist allerdings relativ zeitaufwendig. Es ist Aufgabe der vorliegenden Erfindung, ein Verfahren zur Überwachung der Dichtigkeit wenigstens einer Schottung und einer entsprechenden Einrichtung anzugeben, die mit wenig Zeitaufwand und effektiv eine Dichtigkeitsüberwachung von Schottungen ermöglicht. Ferner ist es Aufgabe der vorliegenden Erfindung, eine Schottung anzugeben, mit der eine effiziente Überwachung der Dichtigkeit ermöglicht ist.

Gelöst wird diese Aufgabe durch ein Verfahren zur Überwachung der Dichtigkeit wenigstens einer Schottung, die zur dichten Durchführung von Kabeln und Rohrleitungen durch Bauteile geeignet ist, wobei zunächst ein Hohlraum in der wenigstens einen Schottung mit einem von der Umgebung sich unterscheidenden Druck beaufschlagt wird, wobei anschließend der Druck über eine vorgebbare Zeit oder nach einer vorgebbaren Zeit gemessen wird und bei Überschreiten oder Unterschreiten eines vorgebbaren Solldruckwertes ein Signal generiert wird, das eine unzureichende Dichtigkeit repräsentiert.

Unter dem Begriff Hohlraum wird im Rahmen der Erfindung auch der Begriff Prüfraum verstanden. Dieser ist in einem Doppelschottsystem zwischen den beiden Dichtungen angeordnet und in einem Einzelschottsystem wie beispielsweise gemäß der DE 101 50 075 A1, das kommunizierende System bzw. die Bereiche, die miteinander in Form der Aussparung und Bohrungen dort in Verbindung stehen, d.h. wenn dort ein Druck eingebracht wird, der von der Umgebungsluft unterschiedlich ist, diejenigen Bereiche, die dem gleichen Druck unterliegen. Der Hohlraum wird erfindungsgemäß mit Überdruck oder mit Unterdruck beaufschlagt. Im Falle des Beaufschlagens des Hohlraums mit Überdruck wird ein Signal, das eine unzureichende Dichtigkeit repräsentiert, generiert, wenn der Solldruckwert unterschritten wird. Im Falle des Beaufschlagens mit Unterdruck wird ein entsprechendes Signal generiert, wenn der Solldruckwert überschritten wird.

Durch die erfindungsgemäße Idee, einen präzisen Referenzdruck in den Hohlraum einzusteuern und nach einer gewissen Zeit bzw. während einer gewissen vorgebbaren Zeit den Druck in dem Hohlraum zu messen und mit einem Solldruckwert zu vergleichen bzw. einer Solldruckkurve, kann eine sehr präzise Aussage darüber vorgenommen werden, ob die Schottung ausreichend dicht ist. Bauteile sind im Rahmen der Erfindung insbesondere Wände, Wannen und ähnliche Bauteile. Es können Bauteile jeglicher Art Verwendung finden.

Vorzugsweise wird das Signal über eine Datenfernübertragung, die auch teilweise kabellos sein kann, einer Überwachungsvorrichtung übermittelt, die ausgestaltet ist, um mehrere Schottungen zu überwachen. Hierbei kann insbesondere grundsätzlich ein Signal nach einer Messung generiert werden. Eine unzureichende Dichtigkeit könnte beispielsweise durch eine 0 repräsentiert werden und eine ausreichende Dichtigkeit durch eine 1. Es handelt sich dann um binäre Signale. Durch die bevorzugte Weiterbildung der Erfindung können mehrere Schottungen mehrerer Bauwerke bzw. Lokalitäten auf einfache Art und Weise, effizient und effektiv überwacht werden. Sollte sich herausstellen, dass eine oder mehrere Schottungen defekt sind, kann ein Kundendienst an den jeweiligen Ort beordert werden, der dann feststellen kann, weswegen eine Undichtigkeit vorliegt und diese beheben kann.

Eine besonders schnelle Verfahrensführung ist dann möglich, wenn die Hohlräume mehrerer Schottungen gleichzeitig mit einem sich von der Umgebung unterscheidenden Druck beaufschlagt werden, wobei dann auch die Messungen vorzugsweise gleichzeitig oder im Wesentlichen gleichzeitig durchgeführt werden können, so dass auch im Wesentlichen gleichzeitig die entsprechenden Messwerte mit dem vorgebbaren bzw. den vorgebbaren Solldruckwert(en) verglichen werden und die dazugehörigen Signale generiert werden, die eine unzureichende oder eine zureichende Dichtigkeit repräsentieren.

Eine sehr genaue Messung ist dann möglich, wenn die Hohlräume mehrerer Schottungen hintereinander mit einem sich von der Umgebung unterscheidenden Druck beaufschlagt werden. Wenn vor Beaufschlagung des Hohlraums einer Schottung mit dem Druck die Dichtigkeit einer anderen Schottung überprüft wurde, ist sehr einfach eine Zuordnung des generierten Signals zu der jeweiligen Schottung möglich. Hierbei findet also eine Prüfung der Schottung nacheinander statt. Alternativ ist hierzu die vorstehend schon genannte gleichzeitige Prüfung. In diesem Fall, d.h. bei der gleichzeitigen Prüfung, wird den jeweiligen Schottungen eine Kennung zugeordnet, die mit dem jeweiligen einer Schottung zugeordneten Signal, das eine unzureichende oder eine zureichende Dichtigkeit repräsentiert, weitergeleitet wird. Alternativ hierzu könnten die entsprechenden Signale auch mit unterschiedlichen (Träger-)Frequenzen gesendet werden. Die Kennung kann eine Fahne (flag) sein, die vor oder nach dem relevanten Signal im, beispielsweise binären, System verwendet wird. Vorzugsweise ist jeder Schottung eine Kennung zugeordnet, die in der Überwachungsvorrichtung eine eineindeutige Zuordnung zu einer Lokalität ermöglicht.

Die Aufgabe wird ferner durch eine Einrichtung zur Überwachung der Dichtigkeit wenigstens einer Schottung gelöst, die zur dichten Durchführung von Kabeln und/oder Rohrleitungen durch Bauteile geeignet ist, wobei eine Druckleitung zur Zuführung von einem von der Umgebung sich unterscheidenden Druck zu einem Hohlraum der wenigstens einen Schottung vorgesehen ist und außerdem wenigstens ein Drucksensor, wenigstens eine Vergleichsvorrichtung zum Vergleichen eines vorgebbaren Druckwertes mit einem Drucksignal des wenigstens einen Drucksensors und zum Erzeugen eines Vergleichswertes, und mit einer Überwachungsvorrichtung, die mit dem Ausgang der Vergleichsvorrichtung wenigstens mittelbar verbunden ist. Die erfindungsgemäße Einrichtung ermöglicht eine sehr effiziente Überwachung der Dichtigkeit wenigstens einer Schottung und vorzugsweise mehrere Schottungen. Unter wenigstens mittelbar verbunden wird sowohl eine Verbindung über entsprechende Datenkabel als auch eine kabellose Verbindung verstanden.

Eine besonders genaue Messung bzw. eine genaue Überwachung der Dichtigkeit wenigstens einer Schottung ist dann möglich, wenn die Druckleitung in einen Referenzdruckbehälter mündet. Hierdurch kann sehr genau, vor allem bei einem großen Volumen des Referenzdruckbehälters, der eingesteuerte Druck in den Hohlraum eingestellt werden. Vorzugsweise führt zu jeder Schottung eine Druckleitung, die insbesondere vorzugsweise mit einem Ventil jeweils versehen ist. Wenn mehrere Ventile vorgesehen sind, die hintereinander durchleitend geschaltet sind, wobei jeder Schottung wenigstens ein Ventil zugeordnet ist, ist eine genaue Zuordnung der jeweiligen Messung zu der jeweiligen Schottung möglich. Es handelt sich hierbei vorzugsweise um eine Art Multiplex-Verfahren bzw. eine Multiplex-Einrichtung, bei der die entsprechenden Ventile zeitlich gesehen hintereinander schaltbar sind. Es ist vorzugsweise ein Selektor vorgesehen, der über eine Ansteuerung über ein Bussystem die jeweiligen Ventile ansteuert. Bei den Ventilen handelt es sich vorzugsweise um magnetgesteuerte 2/2-Wege-Ventile mit Entlüftung.

Wenn der Vergleichswert der Überwachungsvorrichtung über eine Datenfernübertragung zuführbar ist, ist es möglich, in einer entsprechend großen Entfernung die Überwachungsvorrichtung anzuordnen, wodurch an sehr vielen Lokalitäten eine Vielzahl von Schottungen überwacht werden können. Die Datenfernübertragung geschieht vorzugsweise über Funk, wie beispielsweise mit einem GSM- oder UMTS-System oder mit GRPS. Es können auch andere drahtlose oder mit Kabeln versehene Datenfernübertragungen möglich sein, wie beispielsweise W-LAN oder ISDN. Vorzugsweise ist die Datenfernübertragung zur Überwachungsvorrichtung wenigstens teilweise drahtlos.

Wenn das Drucksignal der Vergleichsvorrichtung über eine wenigstens teilweise drahtlose Verbindung zugeführt wird, werden vor Ort, d.h. in der Lokalität bzw. dem Bauwerk, wo sich die Schottungen befinden, erhebliche Verbindungsarbeiten, d.h. Bauarbeiten zur Verlegung von Kabeln etc., eingespart. Vorzugsweise ist jeder Schottung eine Kennung zugeordnet. Diese Kennung sollte zumindest im Hinblick auf eine Lokalität bzw. ein Bauwerk jeweils unterschiedlich sein.

Vorzugsweise sind die Vergleichswerte einer wenigstens eine Schottung, insbesondere mehreren Schottungen, aufweisenden Baueinheit oder Lokalität wenigstens teilweise über eine drahtlose Verbindung der Überwachungsvorrichtung in einem Datenpaket übermittelbar. Dieses Datenpaket umfasst insbesondere die Vergleichswerte der verschiedenen Schottungen und möglicherweise auch diesen Vergleichswerten vor- oder nachgestellte weitere Daten zur Zuordnung der jeweiligen Schottung bzw. der Lokalität oder Baueinheit.

Eine besonders bevorzugte Ausführungsform ist dann gegeben, wenn an oder in der jeweiligen Schottung ein Ventil vorgesehen ist, das einen Drucksensor und eine Sendeeinheit zum Versenden eines Drucksignals umfasst. Hierdurch kann sehr viel Material gespart werden und sehr viel Montagearbeit.

Die Aufgabe wird ferner durch eine Schottung umfassend wenigstens eine Dichtung, wobei die Dichtung oder die Dichtungen einen Hohlraum einschließen, gelöst, wobei ein Durchführungselement, insbesondere zur Durchleitung von Druckluft, vorgesehen ist, das durch eine Dichtung von der Umgebung in den Hohlraum reicht, wobei das Durchführungselement ein Ventil umfasst. Durch die erfindungsgemäße Schottung ist es auf einfache Weise möglich, einen Druck in den Hohlraum einzusteuern, der dort dann auch entsprechend halten kann, um zu messen, ob die Schottung an sich undicht ist. Im Rahmen der Erfindung umfasst der Begriff Schottung auch den Begriff Schottsystem.

Wenn das Durchführungselement einen Drucksensor umfasst, der ausgestaltet bzw. derart angeordnet ist, dass der Druck in dem Hohlraum messbar ist, ist eine besonders elegante und kostensparende Realisierung möglich. Wenn das Durchführungselement eine Sendevorrichtung umfasst, kann sehr platzsparend eine Ankopplung an bzw. Integration in die erfindungsgemäße Einrichtung zur Überwachung der Dichtigkeit wenigstens einer Schottung ermöglicht werden. Die Sendevorrichtung kann ein Drucksignal aussenden, das dem gemessenen Druck in dem Hohlraum entspricht. Es kann allerdings auch ein Vergleichssignal aussenden, wenn eine entsprechende Auswerteelektronik vorgesehen ist, die den gemessenen Druck mit einem vorgebbaren Solldruckwert vergleicht. Ein sehr effizientes Messverfahren kann dann so aussehen, dass zunächst eine Zeit vorgegeben ist oder in der Auswerteelektronik schon eingestellt ist. Es wird dann ein entsprechender Druck in den Hohlraum eingelassen bzw. es herrscht dort ein entsprechender Druck, der von der Umgebung unterschiedlich ist. Es wird nun ein erster Druckwert gemessen. Nach einem vorgebbaren bzw. schon vorgegebenen Zeitablauf wird ein zweiter Druckwert gemessen. Diese beiden Werte werden verglichen. Bei Überschreiten einer maximal erlaubten bzw. vorgebbaren Deviation bzw. Abweichung der beiden Messwerte wird ein Vergleichssignal generiert. Beispielsweise kann ein binäres Signal vorgesehen sein, das ein Vergleichssignal, das eine Undichtigkeit repräsentieren soll, von 0 ergibt und ansonsten eine 1. Nach dem Generieren des Vergleichssignals wird dieses dann entsprechend einer Überwachungsvorrichtung zugesendet bzw. zunächst einer weiteren Vorrichtung zugesendet, in der dieser Werte zwischengespeichert wird, um dann in einem Datenpaket, das die Werte mehrerer Schottungen enthält, der Überwachungsvorrichtung zugesendet zu werden.

Vorzugsweise wird von der Sendevorrichtung, die von dem Durchführungselement umfasst ist, auch eine Kennung, die der jeweiligen Schottung zugeordnet werden kann, mitgesendet. Die Sendevorrichtung kann auch auf einer ganz spezifischen Frequenz, insbesondere Trägerfrequenz, senden, die von Schottung zu Schottung sich unterscheidet.

Die Erfindung wird nachstehend ohne Beschränkung des allgemeinen Erfindungsgedankens anhand von Ausführungsbeispielen unter Bezugnahme auf die Zeichnungen beschrieben, wobei bezüglich aller im Text nicht näher erläuterten erfindungsgemäßen Einzelheiten ausdrücklich auf die Zeichnungen verwiesen wird. Es zeigen:
- Fig. 1: eine schematische Schnittdarstellung eines Doppelschotts bzw. einer Doppelschottung,
- Fig. 2: eine schematische Darstellung einer Messkurve des Drucks über die Zeit,
- Fig. 3: eine schematische Darstellung einer erfindungsgemäßen Überwachungseinrichtung,
- Fig. 4: eine schematische Darstellung einer erfindungsgemäßen Überwachungseinrichtung in einer anderen Ausführungsform,
- Fig. 5: eine schematische Darstellung einer erfindungsgemäßen Überwachungseinrichtung in einer weiteren Ausführungsform, und
- Fig. 6: eine schematische teilweise Schnittdarstellung einer erfindungsgemäßen Doppelschottung

In den folgenden Figuren sind jeweils gleiche oder gleichartige Elemente bzw. entsprechende Teile mit denselben Bezugsziffern versehen, so dass von einer entsprechenden erneuten Vorstellung abgesehen wird und lediglich Abweichungen der in diesen Figuren dargestellten Ausführungsbeispiele gegenüber dem ersten Ausführungsbeispiel erläutert werden.

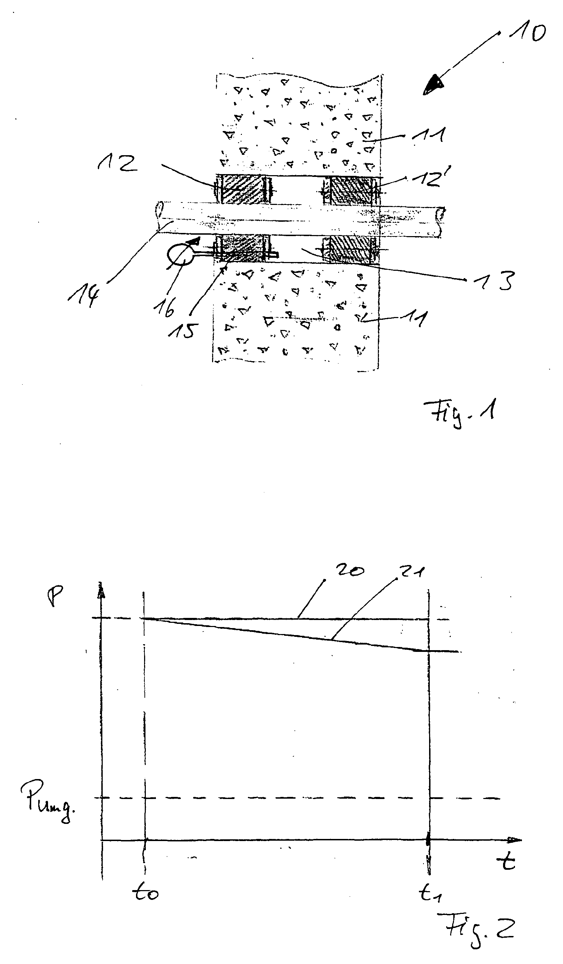

Fig. 1 zeigt eine Schottung 10 in einer schematischen Schnittdarstellung, wobei die Schottung 10 schon teilweise ausgerüstet ist, um bei dem erfindungsgemäßen Verfahren und der erfindungsgemäßen Einrichtung zur Überwachung der Dichtigkeit der Schottung zu dienen.

Es handelt sich hierbei um eine Doppelschottung, die vorgesehen ist, um eine Leitung 14 wie beispielsweise ein elektrisches Kabel durch eine Wand 11 druckluftdicht, wasserdicht und ggf. auch feuerabweisend durchzuführen. Hierzu sind in der Doppelschottung zwei Dichtungen 12 und 12' jeweils an den beiden Seiten der Wand 111 vorgesehen, durch die die Leitung 14 geführt wird. Die Dichtungen 12 und 12' sind entsprechend mit Pressdruck beaufschlagt in die Wand 11 eingeführt, so dass eine Dichtung zur Wand und auch zur Leitung 14 erzeugt wird. Zwischen den beiden Dichtungen 12 und 12' ist ein Hohlraum 13 ausgebildet, der auch als Prüfraum bezeichnet werden kann. Der Hohlraum 13 kommuniziert über ein Rohr 15 mit einem Drucksensor 16. Der Drucksensor 16 dient dazu, den Druck in dem Hohlraum 13 zu messen.

Zur Messung bzw. Feststellung der Dichtigkeit der Schottung 10 gemäß Fig. 1 wird kurzfristig ein Überdruck im Prüfraum bzw. Hohlraum 13 erzeugt. Ansonsten ist der Hohlraum auf gleichem Druckniveau wie der Außendruck bzw. der Umgebungsdruck, also entspannt. Alternativ kann der Prüfraum auch langfristig mit einem Überdruck belastet sein, wobei der Druckabfall kontinuierlich gemessen wird.

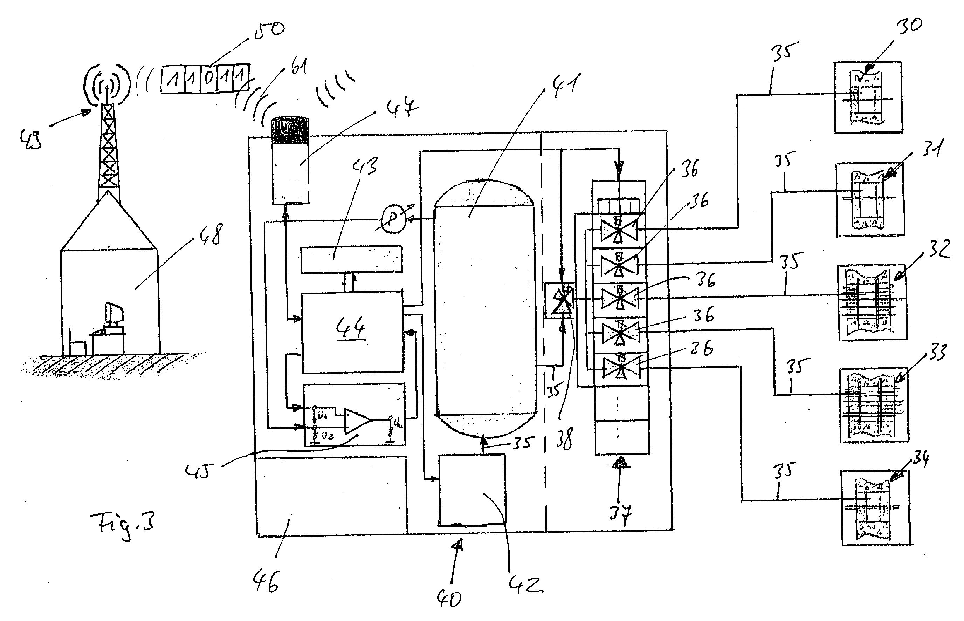

Fig. 2 zeigt eine Kurve in einem schematischen Diagramm des Drucks P über die Zeit t. Mit 20 ist eine Idealkurve dargestellt, bei der über eine Zeitspanne von t₀ bis t₁ quasi kein Druckverlust vorherrscht. Mit 21 ist eine Toleranzkurve dargestellt, die einen entsprechenden Druckabfall über den Zeitraum von t₀ bis t₁ darstellt, der noch tolerabel ist. Sämtliche Druckverluste oberhalb der Toleranzkurve 21 würden dann als ausreichend dichte Schottung angesehen. Sämtliche Kurven, die darunter lägen, als undichte Schottung. Mit P_{mg} ist der Umgebungsdruck angegeben. In diesem Beispiel wurde mit einem Überdruck in dem Hohlraum 13 gearbeitet. Es kann allerdings auch ein Unterdruck Verwendung finden.

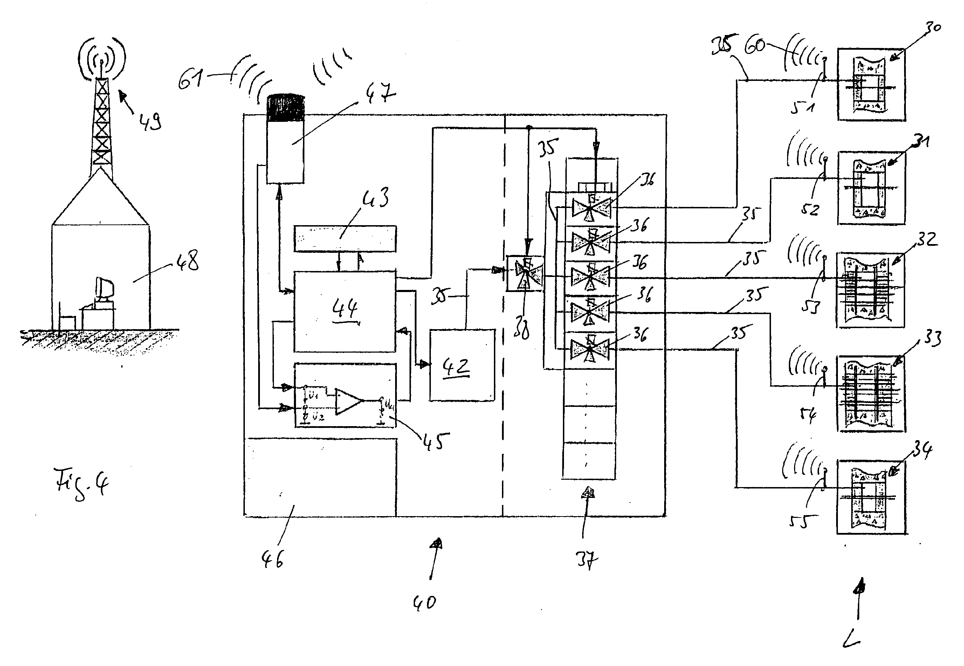

Fig. 3 zeigt eine schematische Darstellung einer erfindungsgemäßen Einrichtung zur Überwachung der Dichtigkeit wenigstens einer Schottung und in diesem Fall fünf Schottungen. Die Schottungen sind mit den Bezugsziffern 30 bis 34 gekennzeichnet. Die Schottungen 30 bis 34 sind mit Druckleitungen 35 in Verbindung, die bis in den jeweiligen Hohlraum der Schottungen 30 bis 34 reichen. Die Druckleitungen 35 sind mit jeweiligen Ventilen 36 verbunden. Die Ventile 36 sind beispielsweise 2/2-Wege-Ventile, die magnetgesteuert sind und eine Entlüftung aufweisen. Über ein Bussystem, das durch die Leitungen oberhalb des Selektors 37 angedeutet ist, werden die jeweiligen Ventile nacheinander oder auch gleichzeitig angesteuert. Linksseitig der Ventile 36 sind weitere Druckleitungen 35 vorgesehen, die in einem Ventil 38 münden, das auch ein 2/2-Wege-Ventil mit Entlüftung und Magnetsteuerung bzw. elektrischer Steuerung sein kann.

Aus einem Referenzdruckbehälter 41 wird der Referenzdruck über eine Druckleitung 35 dem Ventil 38 zugeführt und von diesem Ventil 38, das zum Durchlassen des Drucks aus dem Referenzdruckbehälter 41 geschaltet werden kann, oder zum Sperren, zu den jeweiligen Ventilen 36 durchgesteuert. Anschließend kann die Druckluft zu den jeweiligen Schottungen 30 bis 34 durchgesteuert werden. Die Druckluft in dem Referenzdruckbehälter 41 wird in einem Kompressor 42 erzeugt, der über einen Mikroprozessor 44 gesteuert wird. Die elektronischen und Druckluftkomponenten, die angesprochen wurden und im Folgenden noch angesprochen werden, sind beispielsweise in einer Baueinheit in der Steuervorrichtung 40 realisiert. Dies kann eine zentrale Steuervorrichtung sein. Der Selektor 37 bzw. die Ventile 36 und 38 können auch getrennt von der zentralen Steuervorrichtung 40 angeordnet sein. Die elektrisch zu versorgenden Komponenten werden über eine Stromversorgung 46 entsprechend versorgt. Diese kann durch Solarzellen und einen Akkumulator ausgestaltet sein, so dass auch eine vom Stromnetz unabhängige Stromversorgung ermöglicht ist.

In dem Ausführungsbeispiel gemäß Fig. 3 wird die Dichtigkeitsmessung mit Hilfe eines kommunizierenden Referenz-Druckbehälters 41 durchgeführt, in dem zunächst ein definierter Prüfdruck aufgebaut wird. In der zentralen Steuervorrichtung 40 befindet sich die Auswerteeinrichtung, insbesondere in Form des Komparators 45, der einen aus der dem Mikroprozessor 44 zur Verfügung stehenden Vergleichsdruckwert mit dem gemessenen Druckwert aus dem Referenz-Druckbehälter 41 vergleicht und das Ergebnis dem Mikroprozessor 44 zur Verfügung stellt. Das entsprechende Ergebnis zu der jeweiligen Schottung 30 bis 34 wird dann in einem Register 43 gesammelt und nach Beendigung der Messung der Dichtigkeit sämtlicher Schottungen 30 bis 34 per Funksender einer Messwarte 48 übermittelt. Voraussetzung für dieses Messverfahren ist eine Verbindung bzw. Verrohrung zwischen den Dichtungssystemen 30 bis 34 und der Steuervorrichtung 40.

Das Messverfahren soll im Folgenden genauer erläutert werden. Zunächst wird ein Signal von der Messwarte 48 über den Sende-/Empfangsmast 49 zur Funkeinheit 47 gesendet. Hierbei handelt es sich um eine Aufforderung, eine Messung der Dichtigkeit der Schottungen 30-34 durchzuführen. Diese Aufforderung wird dem Mikroprozessor 44 bzw. einem Computer zugeführt, der den Kompressor 42 veranlasst, über die Rohrleitung 35 einen Referenzdruck in dem Referenzdruckbehälter 41 aufzubauen. Nach Aufbauen des Referenzdrucks in dem Referenzdruckbehälter 41 wird der Selektor 37 bzw. der Ventilverteiler 37 angesteuert, und zwar vorzugsweise über ein Bussystem, so dass das erste Ventil 36, das in der Reihe der Ventile das oberste ist, durchgesteuert wird und außerdem auch das Ventil 38. Auf diese Weise gelangt Druckluft von dem Referenzdruckbehälter 41 in den Hohlraum der Schottung 30. Die Ventile werden erst dann auf durchleitend gesetzt, wenn der Solldruck in dem Referenzdruckbehälter 41 gemessen über den Komparator 45 mit einem im Mikroprozessor 44 bzw. im Computer 44 gespeicherten Druck übereinstimmt.

Nach Öffnen der Ventile gleicht sich der Druck in dem gesamten Drucksystem aus. Das Prüfvolumen bzw. der Hohlraum der Schottung 30, die Druckleitung 35 und die weiteren Leitungen sowie der Referenzdruckbehälter 41 bilden dann ein kommunizierendes System. Damit ist der Hohlraum in der Schottung 30 auf dem gleichen Druck wie der Druck im Referenzdruckbehälter 41. Anschließend wird der Gesamtdruck überprüft. Sofern das Dichtungssystem bzw. die Schottung 30 eine Leckage aufweist, wird der Gesamtdruck kurzfristig abgebaut. Ist keine Leckage vorhanden, so bleibt der Gesamtdruck erhalten. Dieser Messvorgang wird durch den Mikroprozessor 44 gesteuert. Es werden insbesondere die Messzeit vorgegeben und die Ergebnisdaten von der Messschaltung eingefordert. Die Messzeit kann relativ kurz sein, wie beispielsweise 20 Sekunden. Auch eine gewisse Leckage kann, wie unter Bezugnahme auf die Fig. 2 näher beschrieben wurde, toleriert werden. Nach Durchführung der Messung wird das Gesamtsystem durch einen Steuerbefehl des Mikroprozessors 44 wieder durch den Selektor 37 getrennt und das Prüfvolumen im Dichtungssystem wird ebenfalls durch den Selektor 37 entspannt. Der Kompressor 42 baut wieder den erforderlichen definierten Prüfdruck im Referenzdruckbehälter 41 auf und der Messvorgang wiederholt sich für das nächste angeschlossene Dichtungssystem bzw. die nächste angeschlossene Schottung 31.

Das Ergebnis der ersten Messung wird von dem Mikroprozessor in einen Kurzspeicher (Register 43) eingelesen. Ist das Dichtungssystem bzw. die Schottung 30 als dicht erkannt worden, wird ein "High"-Befehl ins Register geschoben, beispielsweise eine binäre 1. Wird ein Dichtungssystem als undicht erkannt, sendet die Messschaltung einen "Low"-Befehl ins Register, wie beispielsweise eine binäre 0. Soweit alle Messungen beendet sind, wird das Register ausgelesen und ein "High-, Low-"Kettensignal bzw. allgemein ein Signal 50 gesendet. Mit Hilfe dieses Verfahrens ist es in einer Messwarte möglich, eine große Anzahl von Dichtungssystemen bzw. Schottungen über eine große Distanz auf Dichtigkeit hin zu überprüfen, wobei diese Schottungen in verschiedenen Lokalitäten angeordnet sein können.

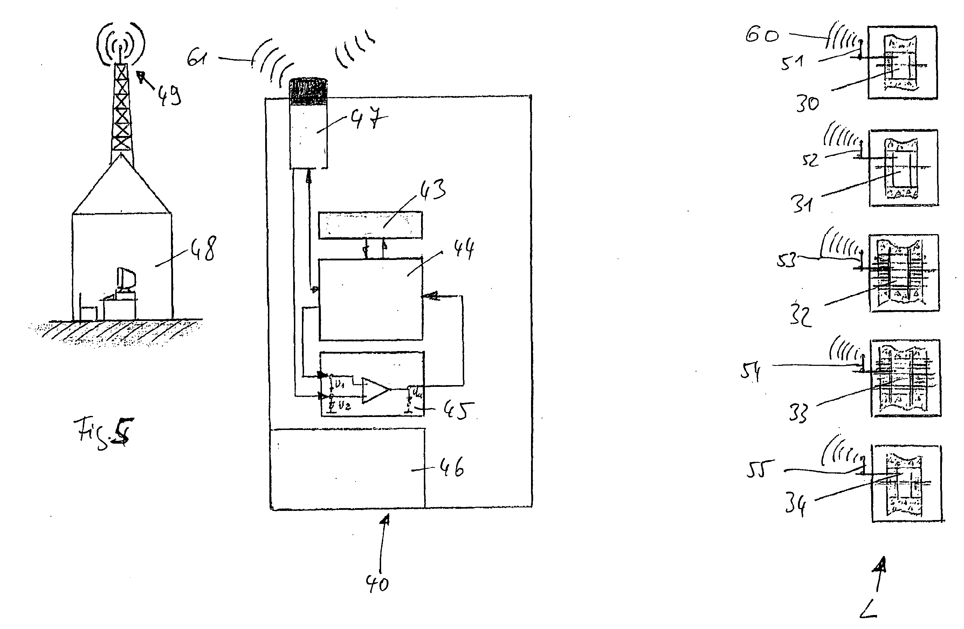

Fig. 4 zeigt eine schematische Darstellung einer weiteren erfindungsgemäßen Einrichtung zur Überwachung der Dichtigkeit wenigstens einer Schottung 30 bis 34. Diese Schottungen 30 bis 34 sind in einer Lokalität L angeordnet. Es können auch mehrere Lokalitäten wie beispielsweise mehrere Gebäude entsprechend angesteuert werden. Im Unterschied zu dem vorherigen Ausführungsbeispiel fehlt in diesem Beispiel der Referenzdruckbehälter 41. Es wird stattdessen direkt Druckluft über den Kompressor 42 in die entsprechenden Schottungen 30 bis 34 eingesteuert. Nach Einsteuern der Druckluft in eine Schottung oder in alle Schottungen bzw. mehrere Schottungen werden die entsprechenden diesen Schottungen zugeordneten Ventile im Selektor 37 geschlossen, so dass sich ein geschlossenes Dichtungssystem ergibt. In diesem Dichtungssystem wird entsprechend überprüft, ob eine Leckage vorliegt. Sofern dieses der Fall ist, wird der entsprechende Prüfdruck kurzfristig abgebaut. Der entsprechend in den Hohlraum der jeweiligen Schottung 30 bis 34 vorherrschende Druck wird über einen Drucksensor, der mit einem Sender 51 bis 55 verbunden ist, gemessen. Der gemessene Druck wird der Funkeinheit 47 zugesendet und in dem Komparator 45 mit einem im Mikroprozessor vorliegenden Druckwert verglichen. Die weiteren Verfahrensschritte entsprechen denen aus Fig. 3.

Auch in diesem Ausführungsbeispiel ist es bevorzugt, wenn eine Schottung nach der anderen auf Dichtigkeit überprüft wird. Es ist allerdings auch möglich, die fünf Schottungen 30 bis 34 gleichzeitig bzw. quasi gleichzeitig bzw. im Wesentlichen gleichzeitig auf Dichtigkeit zu überprüfen. Hierzu wird entsprechend ein Überdruck gleichzeitig in die Hohlräume der Schottungen 30 bis 34 eingebracht und mit unterschiedlichen Kennungen oder bei unterschiedlichen Frequenzen der Druck jeder einzelnen Schottung 30 bis 34 zu der Funkeinheit 47 übermittelt und dann kennungsspezifisch bzw. frequenzspezifisch in dem Komparator 45 bzw. dem Mikroprozessor 44 bearbeitet.

Fig. 5 zeigt eine weitere erfindungsgemäße Ausführungsform einer Einrichtung zur Überwachung der Dichtigkeit wenigstens einer Schottung in schematischer Darstellung. In dieser Ausführungsform wird ein dauerhafter Prüfdruck in den Hohlräumen der Schottungen 30 bis 34 aufgebaut. Nach Aufforderung durch die Messwarte 48 werden sämtliche Schottungen dieser Lokalität auf Dichtigkeit dadurch überprüft, dass der jeweilige Druck in den Hohlräumen der Schottungen gemessen wird und in der Steuervorrichtung 40 ausgewertet wird. Hierzu werden die gemessenen Drücke beispielsweise im Komparator 45 mit Referenzdruckwerten aus dem Mikroprozessor 44 verglichen. Es können auch vorherige Druckmesswerte gespeichert werden, um eine Abklingkurve des Drucks darstellen zu können. Es kann auch vorgesehen sein, dass ausschließlich die aktuellen Messwerte mit dem jeweiligen vorher ermittelten Messwert verglichen werden.

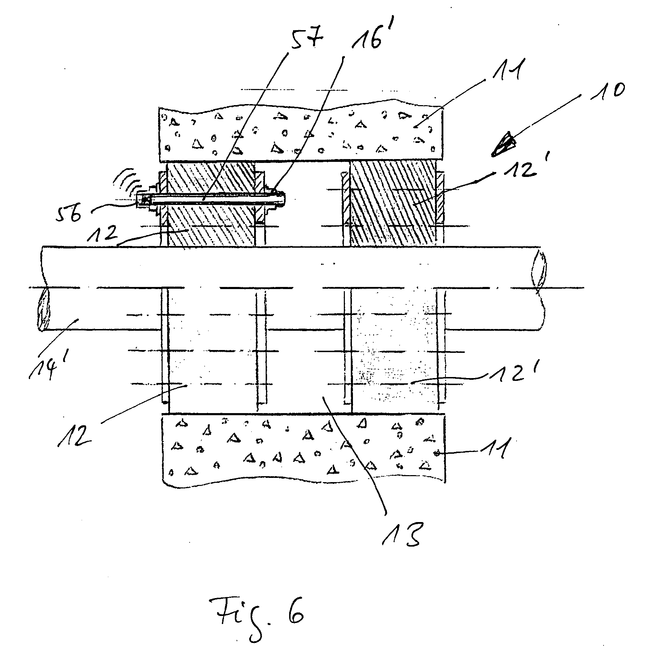

Fig. 6 zeigt eine schematische teilweise Schnittdarstellung einer erfindungsgemäßen Schottung, die im Wesentlichen der aus Fig. 1 entspricht. Im Unterschied zu der Schottung aus Fig. 1 ist ein Ventil 57 bzw. ein Rohrstück mit Ventil 57 vorgesehen, das von der Umgebung bis in den Hohlraum 13 reicht. Im Hohlraum 13 bzw. am Ende des Ventils 57 bzw. der Durchführung ist ein Drucksensor 16' angeordnet. Auf der anderen Seite des Ventils 57 bzw. der Durchführung 57 ist ein Sender 56 angeordnet, der das gemessene Drucksignal zu einem Empfänger senden kann. Es kann ferner auch eine Kennung versendet werden. Durch das Ventil 57 lässt sich ein entsprechender Prüfdruck bzw. Über- oder Unterdruck in den Hohlraum 13 einführen. Das Ventil 57 ist dann so ausgestaltet, dass der Druck im Hohlraum 13 gehalten werden kann, sofern keine weitere Undichtigkeit der Dichtungen 12 und 12' existieren. Die Dichtungen 12 und 12' dichten im übrigen in diesem Ausführungsbeispiel eine Rohrleitung 14' ab.

### Bezuciszeichenliste

- 10: Schottung
- 11: Wand
- 12, 12': Dichtung
- 13: Hohlraum
- 14: Leitung
- 14': Rohrleitung
- 15: Rohr
- 16, 16': Drucksensor
- 20: Idealkurve
- 21: Toleranzkurve
- 30: Schottung
- 31: Schottung
- 32: Schottung
- 33: Schottung
- 34: Schottung
- 35: Druckleitung
- 36: Ventil
- 37: Selektor
- 38: Ventil
- 40: Steuervorrichtung
- 41: Referenzdruckbehälter
- 42: Kompressor
- 43: Register
- 44: Mikroprozessor
- 45: Komparator
- 46: Stromversorgung
- 47: Funkeinheit
- 48: Messwarte
- 49: Sende-/Empfangsmast
- 50: gesendetes Signal
- 51: Sender/Empfänger
- 52: Sender/Empfänger
- 53: Sender/Empfänger
- 54: Sender/Empfänger
- 55: Sender/Empfänger
- 56: Sender/Empfänger
- 57: Ventil
- 60: Datenübertragung
- 61: Datenfernübertragung
- P: Druck
- I: Zeit
- L: Lokalität

## Patentansprüche

1. Verfahren zur Überwachung der Dichtigkeit wenigstens einer Schottung (10, 30 - 34), die zur dichten Durchführung von Kabel (14) und/oder Rohrleitungen (14') durch Bauteile (11) geeignet ist, **dadurch gekennzeichnet, dass** zunächst ein Hohlraum (13) in der wenigstens einen Schottung (10, 30 - 34) mit einem von der Umgebung sich unterscheidenden Druck (P) beaufschlagt wird, wobei anschließend der Druck (P) über eine vorgebbare Zeit (t) oder nach einer vorgebbaren Zeit (t) gemessen wird und bei Überschreiten oder Unterschreiten eines vorgebbaren Solldruckwertes (21, P_{Soll}) ein Signal (50) generiert wird, das eine unzureichende Dichtigkeit repräsentiert.

2. Verfahren nach Anspruch 1, **dadurch gekennzeichnet, dass** das Signal (50) über eine Datenfernübertragung (60, 61) einer Überwachungsvorrichtung (48) übermittelt wird, die ausgestaltet ist, um mehrere Schottungen (10, 30 - 34) zu überwachen.

3. Verfahren nach Anspruch 1 oder 2, **dadurch gekennzeichnet, dass** die Hohlräume (13) mehrerer Schottungen (10, 30 - 34) gleichzeitig mit einem sich von der Umgebung unterscheidenden Druck (P) beaufschlagt werden.

4. Verfahren nach Anspruch 1 oder 2, **dadurch gekennzeichnet, dass** die Hohlräume mehrerer Schottungen (10, 30 - 34) mit einem sich von der Umgebung unterscheidenden Druck (P) beaufschlagt werden.

5. Verfahren nach Anspruch 4, **dadurch gekennzeichnet, dass** vor Beaufschlagen eines Hohlraums einer Schottung (10, 30 - 34) mit dem Druck (P) die Dichtigkeit einer anderen Schottung (10, 30 bis 34) überprüft wurde.

6. Verfahren nach einem oder mehreren der Ansprüche 2 bis 5, **dadurch gekennzeichnet, dass** jeder Schottung (10, 30 - 34) eine Kennung zugeordnet ist, die in der Überwachungsvorrichtung (41) eine eineindeutige Zuordnung zu einer Lokalität ermöglicht.

7. Einrichtung zur Überwachung der Dichtigkeit wenigstens einer Schottung (10, 30 - 34), die zur dichten Durchführung von Kabeln (14) und/oder Rohrleitungen (14') durch Bauteile (11) geeignet ist, umfassend eine Druckleitung (15) zur Zuführung von einem von der Umgebung sich unterscheidenden Druck (P) zu einem Hohlraum (13) der wenigstens einen Schottung (10, 30 - 34), wenigstens einen Drucksensor (16, 16'), wenigstens eine Vergleichsvorrichtung (45) zum Vergleichen eines vorgebbaren Druckwertes (P_{Soll}) mit einem Drucksignal (P_{Ist}) des wenigstens einen Drucksensors (16, 16'), und umfassend eine Überwachungsvorrichtung (48), die mit dem Ausgang der Vergleichsvorrichtung (45) wenigstens mittelbar verbunden ist.

8. Einrichtung nach Anspruch 7, **dadurch gekennzeichnet, dass** die Druckleitung (15) in einen Referenzdruckbehälter (41) mündet.

9. Einrichtung nach Anspruch 7 oder 8, **dadurch gekennzeichnet, dass** zu jeder Schottung (10, 30 - 34) eine Druckleitung (15) führt.

10. Einrichtung nach Anspruch 9, **dadurch gekennzeichnet, dass** mehrere Ventile (36) vorgesehen sind, die hintereinander durchleitend geschaltet sind, wobei jeder Schottung (10, 30 - 34) wenigstens ein Ventil (36) zugeordnet ist.

11. Einrichtung nach einem oder mehreren der Ansprüche 7 bis 10, **dadurch gekennzeichnet, dass** der Vergleichswert (50) der Überwachungsvorrichtung (48) über eine Datenfernübertragung (61) zuführbar ist.

12. Einrichtung nach einem oder mehreren der Ansprüche 7 bis 11, **dadurch gekennzeichnet, dass** das Drucksignal (P_{Ist}) der Vergleichsvorrichtung (45) über eine wenigstens teilweise drahtlose Verbindung (60) zugeführt wird.

13. Einrichtung nach Anspruch 12, **dadurch gekennzeichnet, dass** jeder Schottung (10, 30 - 34) eine Kennung zugeordnet wird.

14. Einrichtung nach einem oder mehreren der Ansprüche 7 bis 13, **dadurch gekennzeichnet, dass** die Vergleichswerte (50) einer wenigstens eine Schottung (10, 30 - 34), insbesondere mehrere Schottungen aufweisende Baueinheit (11) oder Lokalität (L) wenigstens teilweise über eine drahtlose Verbindung (61) der Überwachungsvorrichtung (48) in einem Datenpaket übermittelbar ist.

15. Einrichtung nach einem oder mehreren der Ansprüche 7 bis 14, **dadurch gekennzeichnet, dass** an oder in der Schottung (10, 30 - 34) ein Ventil (57) vorgesehen ist, das einen Drucksensor (16') und eine Sendeeinheit (56) zum Versenden eines Drucksignals (P_{Ist}) umfasst.

16. Schottung (10), umfassend wenigstens eine Dichtung (12, 12'), wobei die Dichtung (12, 12') oder die Dichtungen (12. 12') einen Hohlraum (13) einschließen, **dadurch gekennzeichnet, dass** ein Durchführungselement (57) vorgesehen ist, das durch eine Dichtung (12) von der Umgebung in den Hohlraum (13) reicht, wobei das Durchführungselement (57) ein Ventil (57) umfasst.

17. Schottung (10) nach Anspruch 16, **dadurch gekennzeichnet, dass** das Durchführungselement (57) einen Drucksensor (16') umfasst, mittels dessen der Druck in dem Hohlraum (13) messbar ist.

18. Schottung (10) nach Anspruch 17, **dadurch gekennzeichnet, dass** das Durchführungselement (57) eine Sendevorrichtung (56) umfasst.
